# EUROPEAN PATENT APPLICATION

(11) **EP 2 644 678 A1**
(43) Date of publication of application: **02.10.2013**
(21) Application number: 11842642.8
(22) Date of filing: 28.11.2011
(51) Int. Cl.: C09K 3/10, F16J 15/20

(54) **SEAL MEMBER HAVING EXCELLENT WEAR RESISTANCE, AND SEAL STRUCTURE USING SAME**

(30) Priority: 26.11.2010 JP 2010263685
(71) Applicant: Uchiyama Manufacturing Corp., Okayama-shi Okayama 702-8004 (JP)
(72) Inventor: SAKATE, Kazushi, Akaiwa-shi Okayama 701-2221 (JP); KASAMOTO, Tadashi, Akaiwa-shi Okayama 701-2221 (JP); KATAYAMA, Tatsuo, Akaiwa-shi Okayama 701-2221 (JP)
(74) Representative: Müller-Boré & Partner Patentanwälte
(86) International application number: PCT/JP2011/077342
(87) International publication number: WO 2012/070677

(57) **Abstract**

There is provided a seal member which is used in a seal part associated with sliding, comprising a molded rubber article produced by vulcanizing a rubber composition comprising, a hydrogenated nitrile rubber (A), carbon black (B), and carbon black (C) and/or carbon fiber (D), wherein carbon black (B) has a DBP oil absorption of 250 to 450 mL/100 g, carbon black (C) has a DBP oil absorption of 200 mL/100 g or less, and carbon fiber (D) has an average fiber length of 0.05 to 2 mm and an average fiber diameter of 5 to 30 µm; and wherein, based on 100 parts by mass of the hydrogenated nitrile rubber (A), the amount of carbon black (B) is 5 to 15 parts by mass, the total amount of carbon black (C) and/or carbon fiber (D) is 3 to 35 parts by mass, and the total content of the fillers is 40 parts by mass or less. The seal member thus provided has proper hardness and excellent moldability and wear resistance.

## Description

### TECHNICAL FIELD

The present invention relates to a seal member having excellent wear resistance, which is used in a seal part associated with sliding. In particular, it relates to a seal member which is a molded rubber article produced by vulcanizing a rubber composition containing a hydrogenated nitrile rubber and carbon black. It also relates to a seal structure in which such a seal member is used as a sliding part.

### BACKGROUND ART

A seal member which is a molded rubber article produced by vulcanizing a rubber composition containing carbon black has been extensively applied to a variety of machines. Particularly, in a rolling bearing or compressor, a seal member used in a seal part associated with sliding is required to be highly wear resistant and oil resistant. Therefore, such a seal member is a molded article having excellent wear resistance and oil resistance, which is produced by molding by vulcanization of a rubber composition provided by blending a rubber having excellent oil resistance such as a nitrile rubber and a filler such as carbon black.

For example, Patent document No. 1 has described a rubber composition containing a hydrogenated nitrile rubber and carbon black having a compression DBP oil absorption of 100 to 130 mL/100 g, saying that the composition can be molded by vulcanization to give a seal member having excellent wear resistance. A seal member thus obtained, however, has insufficient wear resistance in some applications, and, therefore, further improvement is needed.

Patent document No. 2 has described a seal member for a rolling bearing formed by vulcanizing a rubber composition prepared by blending a carboxylated acrylonitrile-butadiene rubber with nonconductive carbon black and conductive carbon black. It is said that the seal member is conductive and has excellent wear resistance. However, even when this rubber composition is used, it is not always easy to provide a seal member well-balanced in hardness, moldability and wear resistance.

### PRIOR ART REFERENCES

### Patent Documents

Patent Document No. 1: JP 1998-182882A
Patent Document No. 2: JP 2002-372062A

### PROBLEM TO BE SOLVED BY THE INVENTION

To solve the above problems, an objective of the present invention is to provide a seal member having proper hardness as well as excellent wear resistance. Another objective of the invention is to provide a seal structure in which such a seal member is used as a sliding part.

### MEANS FOR SOLVING PROBLEM

The above problems are solved by providing a seal member which is used in a seal part associated with sliding, comprising a molded rubber article produced by vulcanizing a rubber composition comprising,
a hydrogenated nitrile rubber (A),
carbon black (B), and
carbon black (C) and/or carbon fiber (D),
wherein
carbon black (B) has a DBP oil absorption of 250 to 450 mL/100 g,
carbon black (C) has a DBP oil absorption of 200 mL/100 g or less, and
carbon fiber (D) has an average fiber length of 0.05 to 2 mm and an average fiber diameter of 5 to 30 µm,
and wherein, based on 100 parts by mass of the hydrogenated nitrile rubber (A),
the amount of carbon black (B) is 5 to 15 parts by mass,
the total amount of carbon black (C) and/or carbon fiber (D) is 3 to 35 parts by mass, and
the total content of the fillers is 40 parts by mass or less.

Preferably, an acrylonitrile content of the hydrogenated nitrile rubber (A) is 20 to 50 % by mass and a hydrogenation rate is 70 mol% or more. Also preferably, the rubber composition has an ML value of 5 N mor less, which is a minimum torque in an oscillating type cure test at 180 °C. Preferably, a JIS-A hardness is 70 to 80. A suitable embodiment of a seal member according to the present invention is a bearing seal, an oil seal, an O-ring or an X-ring. A suitable embodiment of the present invention is a seal structure having the above seal member as a sliding part.

### EFFECTS OF THE INVENTION

A seal member of the present invention has a proper hardness and is excellent in moldability and wear resistance. It can be, therefore, suitably used as a seal member in a seal part associated with sliding such as a bearing seal, an oil seal, an O-ring or a X-ring.

### BRIEF DESCRIPTION OF THE DRAWINGS

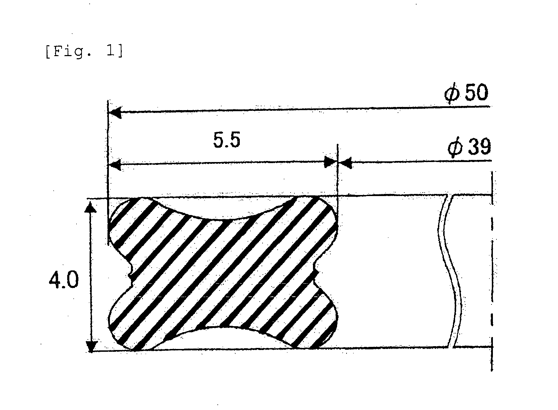

FIG. 1 is a cross-sectional view of a X-ring molded in Example 4 and Comparative Example 5.

### MODE FOR CARRYING OUT THE INVENTION

A seal member of the present invention is a seal member used in a seal part associated with sliding, which is a molded rubber article produced by vulcanizing a rubber composition comprising, a hydrogenated nitrile rubber (A), carbon black (B), and carbon black (C) and/or carbon fiber (D).

A hydrogenated nitrile rubber (A) used in a rubber composition of the present invention is a nitrile rubber (acrylonitrile-butadiene copolymer) in which at least some of double bonds derived from butadiene are hydrogenated. Hydrogenation results in higher wear resistance than that of a non-hydrogenated nitrile rubber. Specifically, a hydrogenation rate is preferably 70 mol% or more, more preferably 80 mol% or more, further preferably 85 mol% or more. An acrylonitrile content (a content of a component derived from acrylonitrile) is preferably 20 to 50 % by mass. If an acrylonitrile content is less than 20 % by mass, oil resistance and wear resistance may be insufficient. An acrylonitrile content is more suitably 25 % by mass or more, further suitably 30 % by mass or more. If an acrylonitrile content is more than 50 % by mass, elastic modulus becomes too high, elastomer performance may be insufficient. Thus, it is more suitably 45 % by mass or less, further suitably 40 % by mass or less. A Mooney viscosity ML₁₊₄ determined at 100 °C is generally 20 to 150 in the light of balance between strength or wear resistance and moldability. A hydrogenated nitrile rubber (A) can be copolymerized with a monomer other than acrylonitrile or butadiene as long as the effects of the present invention are not inhibited. A copolymerization rate with such an additional monomer is generally 10 mol% or less, suitably 5 mol% or less. The type of copolymerization can be, but not limited to, random, block or graft copolymerization.

Carbon black (B) used in a rubber composition of the present invention has a DBP oil absorption of 250 to 450 mL/100 g. Most of general-purpose carbon black used as a filler for a rubber has a DBP oil absorption of 200 mL/100 g or less. In contrast, a rubber composition of the present invention has a significant feature that it employs carbon black (B) having a very large DBP oil absorption of 250 mL/100 g or more. Carbon black (B) having such a very high DBP oil absorption has a highly complicated structure and is thus very effective for reinforcing a crosslinked rubber, so that it would contribute to wear resistance. Furthermore, even in a small amount, it can effectively improve hardness of a crosslinked rubber, so that a molded article having proper hardness for a seal member can be provided. Generally, when a molded article of a crosslinked rubber contains a large amount of carbon black, carbon black tends to be detached due to friction. In contrast, for a rubber composition of the present invention, a relatively smaller amount of carbon black results in desired rubber hardness, so that wear resistance of a crosslinked rubber obtained is significantly improved. A DBP oil absorption of carbon black (B) is suitably 300 mL/100 g or more, more suitably 350 mL/100 g or more. Meanwhile, it is also important that a DBP oil absorption of carbon black (B) is 450 mL/100 g or less. In practice, a higher DBP oil absorption can increase hardness of a molded article of a crosslinked rubber and improve wear resistance, but an excessively high DBP oil absorption inevitably leads to significantly reduced flowability during molding and thus reduced moldability. It is particularly important in case that a seal member has a complicated shape or strict size precision is required for a seal member. Thus, when carbon black (B) has a DBP oil absorption of a particular range, that is, 250 to 450 mL/100 g, wear resistance and moldability go together while proper hardness is maintained.

There are no particular restrictions to the type of carbon black (B), as long as a DBP oil absorption is 250 to 450 mL/100 g. Carbon black (B), which is carbon black having a highly complicated structure, is often conductive. Some of conductive carbon blacks can have a DBP oil absorption within the above range. In many cases, conductive carbon black is added for making a rubber composition conductive, and rarely for improving wear resistance of a molded article. An average primary particle size of carbon black (B) is generally 10 to 50 nm.

In a seal member of the present invention, it is necessary to add carbon black (C) and/or carbon fiber (D) in addition to carbon black (B) described above. Either or both of carbon black (C) and carbon fiber (D) can be added.

Carbon black (C) used in a rubber composition of the present invention has a DBP oil absorption of 200 mL/100 g or less. Carbon black (C) has a less complicated structure than carbon black (B) described above, as is most of carbon blacks added to a common rubber composition. By adding such general-purpose carbon black (C) in addition to special carbon black (B), excellent wear resistance can be obtained while proper hardness and good moldability are maintained. If a DBP oil absorption of carbon black (C) is more than 200 mL/100 g, moldability may be deteriorated and a cost of raw materials increases. A DBP oil absorption of carbon black (C) is suitably 160 mL/100 g or less. Carbon black (C) generally has a DBP oil absorption of 20 mL/100 g or more.

There are no particular restrictions to the type of carbon black (C) as long as a DBP oil absorption is 200 mL/100 g or less. Specifically, SAF, ISAF, HAF, MAF, FEF, GPF, SRF, FT, MT and the like can be used, and MAF is preferably used in the light of balance between performance and a cost. Two or more carbon blacks can be combined as carbon black (C). An average primary particle size of carbon black (B) is generally 10 to 200 nm.

Carbon fiber (D) used in a rubber composition of the present invention has an average fiber length of 0.05 to 2 mm and an average fiber diameter of 5 to 30 µm. By adding such carbon fiber (D) in addition to special carbon black (B), excellent wear resistance can be realized while proper hardness and good moldability are maintained. Addition of carbon fiber (D) can be substantially similarly effective to addition of carbon black (C) described above, but there is a tendency that in comparison with carbon black (C), wear resistance is more improved while moldability and strength are slightly lower. Carbon fiber (D) with an average fiber length of 0.05 to 2 mm and an average fiber diameter of 5 to 30 µm leads to good balance between effects of addition of carbon fiber (D) and moldability. Performance balance can be adjusted by adding both carbon black (C) and carbon fiber (D).

A rubber composition of the present invention contains 5 to 15 parts by mass of carbon black (B) based on 100 parts by mass of a hydrogenated nitrile rubber (A). If a content of carbon black (B) is less than 5 parts by mass, wear resistance is insufficient. A content of carbon black (B) is suitably 6 parts by mass or more. If a content of carbon black (B) is more than 15 parts by mass, moldability is lowered. A content of carbon black (B) is suitably 14 parts by mass or less.

A rubber composition of the present invention contains 3 to 35 parts by mass of carbon black (C) and/or carbon fiber (D) in total, based on 100 parts by mass of a hydrogenated nitrile rubber (A). In the total content is less than 3 parts by mass, hardness and wear resistance are insufficient. The total content is suitably 5 parts by mass or more. If the total content is more than 35 parts by mass, moldability is lowered and a specific gravity is increased. The total content is suitably 30 parts by mass or less, more suitably 25 parts by mass or less.

In a rubber composition of the present invention, it is important that a total content of the fillers is 40 parts by mass or less based on 100 parts by mass of a hydrogenated nitrile rubber (A). Herein, a filler includes carbon blacks not categorized as (B) or (C), and carbon fibers not categorized as (D), in addition to carbon black (B), carbon black (C) and carbon fiber (D) as described above. It also includes fillers other than carbon black or carbon fiber, such as silica, talc, mica, clay, calcium carbonate and titania. A rubber composition of the present invention with the total content of such fillers of 40 parts by mass or less can have excellent wear resistance and moldability. When a filler content is large and thus a rate of rubber components forming a matrix is relatively reduced, a filler tends to be detached under friction, leading to lowering of wear resistance. Therefore, the total content of fillers is suitably 35 parts by mass or less, more suitably 30 parts by mass or less. Meanwhile, the total content of fillers is 8 parts by mass or more, more suitably 12 parts by mass or more.

A vulcanizing agent used for a rubber composition of the present invention can include, but not limited to, sulfur, sulfur-containing compounds and peroxides. Although sulfur or a sulfur-containing compound can be used when a hydrogenation rate in a hydrogenated nitrile rubber (A) is low, it is often preferable to conduct vulcanization using a peroxide. A vulcanizing agent in peroxide vulcanization is suitably an organic peroxide.

A rubber composition of the present invention can contain a rubber or resin other than a hydrogenated nitrile rubber (A) as long as it does not inhibit the effects of the present invention. A content of such a rubber or resin is generally less than 10 parts by mass, suitably less than 5 parts by mass, based on 100 parts by mass of a hydrogenated nitrile rubber (A). A rubber composition of the present invention can contain further additives in addition to a filler and a vulcanizing agent. Examples of such a further additive include a reinforcing agent, a cross-linking aid, an anti-aging agent, a process aid, a lubricant, a plasticizer, a pigment, a coupling agent and a co-crosslinking agent.

There are no particular restrictions to a method for providing a rubber composition by mixing and kneading the above raw materials, and a known kneading method can be employed, including a kneader, a Banbury mixer and an open roll. In the light of moldability, a rubber composition of the present invention preferably has an ML value of 5 N·m or less, which is a minimum torque in an oscillating type cure test at 180 °C. With an ML value of 5 N·m or less, a rubber composition smoothly flows during charging in a mold, facilitating formation of a molded rubber article having a complicated shape. Furthermore, strength of a weld line, dimensional precision, surface condition and the like are improved. An ML value is more preferably 4.5 N·m or less, further preferably 4 N·m or less. An ML value is generally 1 N·m or more.

A composition obtained by thorough kneading as described above can be charged in a mold and then vulcanized by heating at a temperature of 150 to 200 °C for approximately 2 min to 1 hour, to provide a molded rubber article. There are no particular restrictions to a molding method, and press molding and injection molding can be employed. A rubber composition of the present invention is highly flowable, so that it can be readily charged in a mold, facilitating formation of a molded article corresponding to the mold shape.

A molded article thus obtained preferably has a JIS-A hardness of 70 to 80. Generally, in a seal member used in a seal part associated with sliding, proper hardness required in the light of balance between sealing and strength or durability is 70 to 80. For the sake of such hardness, various fillers represented by carbon blacks are added to a rubber as a base material. In a seal member of the present invention, carbon black (B), and carbon black (C) and/or carbon fiber (D) are added to a hydrogenated nitrile rubber (A), so that a molded rubber article having such hardness can be provided while moldability and wear resistance go together.

A seal member of the present invention is highly wear-resistant and, therefore, used in a seal part associated with sliding. The term, "seal part associated with sliding" as used herein includes, in addition to a seal part continuously sliding during operation, a temporarily sliding seal part such as an intermittently sliding seal part and a seal part sliding only when a switch is ON. Suitable embodiments of a seal member used in a seal part associated with sliding include bearing seal, oil seal, O-ring and X-ring. Such a seal member can be extensively applied to a moving part in a variety of machines. A suitable embodiment of the present invention is a seal structure used where the seal member is used as a sliding part. A seal member of the present invention is highly oil-resistant, so that it is suitable for applications in which a sealed oil or grease is used for sliding. Furthermore, a rubber composition of the present invention is highly moldable, so that it is suitable for molding a molded article having a complicated shape, a thin molded article or a molded article with a small line diameter.

There are no particular restrictions to a shape or dimensions of a seal member, and when the seal member is an annular molded article, the use of the present invention is very beneficial. An annular seal member used in a sliding part often has a thin part, making it difficult to mold a shape corresponding to the shape of a mold in a part where the mold is insufficiently filled. It is, therefore, preferable to use a rubber composition of the present invention exhibiting good flowability. In particular, in injection molding or press molding of a string-type rubber composition charged in a mold, insufficient flowability makes it difficult to mold a shape corresponding to the mold shape in a part where the rubber composition joins together. There are no particular restrictions to the shape of a ring in an annular molded article, and depending on an application, any shape can be employed, including a circle, an oval and a square.

In an annular molded article with a smaller sectional area, the use of the present invention is more beneficial. A seal member of the present invention is highly wear resistant, so that even with a small sectional area, it can endure long-term friction or friction under a large load. A rubber composition of the present invention is highly flowable, so that even when an annular molded article with a small sectional area is molded, the rubber composition can be easily charged in a mold. A sectional area of the annular molded article is preferably 200 mm² or less, more preferably 100 mm² or less, further preferably 50 mm² or less. Meanwhile, the sectional area is generally 1 mm² or more. Herein, a sectional area is an average of a sectional area of the whole annular molded article. An outer diameter of the annular molded article is generally about 10 to 300 mm as an equivalent circle diameter.

A rubber composition of the present invention can be easily charged in a mold, so that when an annular molded article has a complicated cross-sectional shape, the use of the present invention is very beneficial. Specifically, a cross-sectional shape of a molded article preferably has a concave. For example, as shown in a cross-sectional view of the molded article formed in Example 4 (FIG. 1), an X-ring which is a molded article with a cross-sectional shape having four concaves is a particularly suitable embodiment.

### EXAMPLES

The present invention will be more specifically described with reference to Examples. The materials used in these examples are as described below.

### (1) Hydrogenated nitrile rubber (H-NBR)

Acrylonitrile content: 36 % by mass, hydrogenation rate: 90 mol%, iodine value: 28 mg/100 mg, Mooney viscosity: ML₁₊₄ (100°C) 58

### (2) Carbon black

### (2-1) Highly conductive carbon black

DBP oil absorption: 420 mL/100 g, average primary particle size: 30 nm

### (2-2) MAF carbon black

DBP oil absorption: 133 mL/100 g, average primary particle size: 34 nm

### (2-3) Highly conductive carbon black

DBP oil absorption: 495 mL/100 g, average primary particle size: 34 nm

### (3) Carbon fiber

Average fiber length: 0.15 mm, average fiber diameter: 12.5 µm

### (4) Cross-linking agent

Dicumyl peroxide

### (5) Cross-linking aid

N,N'-m-phenylenedimaleimide

Evaluation methods in the examples are as follows.

### (a) Vulcanization properties

Determined in accordance with JIS K6300-2. Measured by a curelastometer from JSR Corporation, using, as a sample, an unvulcanized rubber sheet after being kneaded in an open roll. A vulcanization curve at 180 °C for 6 min was obtained, and a minimum value ML (N·m) of torque was determined from a graph in which an ordinate is torque and an abscissa is time.

### (b) Tensile strength at break (TSb) and elongation at break (Eb)

A tensile test was conducted in accordance with JIS K6251. These were determined at 23 °C and a relative humidity of 50 % and at a tension rate of 500 mm/min, using a Dumbbell No.3 type test piece prepared by cutting a sheet with a thickness of 2 mm after secondary vulcanization. Here, a tensile strength at break (TSb) is a tensile strength of a test piece measured at break. An elongation at break (Eb) is an elongation of a test piece measured at break.

### (c)JIS-A hardness (Hs)

Determined in accordance with JIS K6253. It was measured by a type A durometer at 23 °C and a relative humidity of 50 % for a test piece prepared by laminating three sheets with a thickness of 2 mm after secondary vulcanization.

### (d) Wear depth

After primary vulcanization, a sheet was cut into a plate-like test piece with a size of 140 × 110 × 2 mm, which was then subjected to secondary vulcanization in an oven at 180 °C for one hour. Using a plate-like test piece thus prepared, a wear test was conducted. A SUS304 stainless-steel disk was pushed against the test piece at room temperature (23 °C) under the conditions described below, and then rotated. At the end of rotation, a depth of a concave formed by wear in a slided part in the test piece was measured as a wear depth (mm).

### Test conditions:

Radial load in a sliding part: 1 kgf
Disk rotation speed: 1000 rpm
Test period: 10 min

### Example 1

A rubber sheet was prepared by kneading 100 parts by mass of a hydrogenated nitrile rubber (H-NBR), 10 parts by mass of highly conductive carbon black (DBP oil absorption: 420 mL/100 g), 10 parts by mass of MAF carbon black (DBP oil absorption: 133 mL/100 g), 4 parts by mass of dicumyl peroxide (cross-linking agent) and 1 part by mass of N,N'-m-phenylenedimaleimide (cross-linking aid) at room temperature by a kneader and an open roll. The rubber sheet thus prepared was evaluated for its vulcanization properties by the above method, giving an ML value of 3.45 N·m. The results are shown in Table 1.

The rubber sheet thus prepared was press-vulcanized (primary vulcanization) at 180 °C for 10 min as described above, to give a sheet with a thickness of 2 mm, which was then subjected to secondary vulcanization in an oven at 180 °C for one hour, to give a vulcanized sheet with a thickness of 2 mm. A tensile test was conducted using the vulcanize sheet thus formed, giving a tensile strength at break (TSb) of 27 MPa and an elongation at break (Eb) of 230 %. A JIS-A hardness as determined by a type A durometer was 76. As determined by a wear test, a wear depth was 0. 06 mm. These results are summarized in Table 1.

### Example 2

A sample was prepared and evaluated as described in Example 1, substituting 10 parts by mass of carbon fiber for MAF carbon black (DBP oil absorption: 133 mL/100 g). The results are summarized in Table 1.

### Example 3

A sample was prepared and evaluated as described in Example 1, except that the amount of MAF carbon black (DBP oil absorption: 133 mL/100 g) was 5 parts by mass and 8 parts by mass of carbon fiber was further added. The results are summarized in Table 1.

### Comparative Example 1

A sample was prepared and evaluated as described in Example 1, except that highly conductive carbon black (DBP oil absorption: 420 mL/100 g) was absent and the amount of MAF carbon black (DBP oil absorption: 133 mL/100 g) was 35 parts by mass. The results are summarized in Table 1.

### Comparative Example 2

A sample was prepared and evaluated as described in Example 1, except that highly conductive carbon black (DBP oil absorption: 420 mL/100 g) was absent, the amount of MAF carbon black (DBP oil absorption: 133 mL/100 g) was 30 parts by mass and 10 parts by mass of carbon fiber was further added. The results are summarized in Table 1.

### Comparative Example 3

A sample was prepared and evaluated as described in Example 1, substituting 10 parts by mass of highly conductive carbon black (DBP oil absorption: 495 mL/100 g) for highly conductive carbon black (DBP oil absorption: 420 mL/100 g). The results are summarized in Table 1.

### Comparative Example 4

A sample was prepared and evaluated as described in Example 1, except that the amount of highly conductive carbon black (DBP oil absorption: 420 mL/100 g) was 20 parts by mass and MAF carbon black (DBP oil absorption: 133 mL/100 g) was absent. The results are summarized in Table 1.

**[Table 1]**

| | | Example 1 | Example 2 | Example 3 | Comparative Example 1 | Comparative Example 2 | Comparative Example 3 | Comparative Example 4 |
|---|---|---|---|---|---|---|---|---|
| Content | H-NBR | 100 | 100 | 100 | 100 | 100 | 100 | 100 |
| | carbon black (B) DBP oil absorption 420ml/100g | 10 | 10 | 10 | | | | 20 |
| | Carbon black (C) DBP oil absorption 133ml/100g | 10 | | 5 | 35 | 30 | 10 | |
| | Carbon black DBP oil absorption 495ml/100g | | | | | | 10 | |
| | Carbon fiber | | 10 | 8 | | 10 | | |
| | Cross-linking agent | 4 | 4 | 4 | 4 | 4 | 4 | 4 |
| | Cross-linking aid | 1 | 1 | 1 | 1 | 1 | 1 | 1 |
| ML value (N/m) | | 3.45 | 3.6 | 3.55 | 5.89 | 5.51 | 5.31 | 8.9 |
| Tensile strength at break (Mpa) | | 27 | 14 | 23 | 28 | 15 | 23 | 31 |
| Elongation at break (%) | | 230 | 230 | 250 | 210 | 230 | 250 | 150 |
| JIS-A hardness | | 76 | 77 | 74 | 79 | 75 | 82 | 90 |
| Wear depth (mm) | | 0.06 | 0.01 | 0.1 | 0.5 | 0.18 | 0.08 | 0.02 |

As shown in Table 1, in Examples 1 to 3 where 5 to 15 parts by mass of carbon black (B) with a DBP oil absorption of 250 to 450 mL/100 g and 3 to 35 parts by mass of carbon black (C) with a DBP oil absorption of 200 mL/100 g or less and/or carbon fiber (D) were added to 100 parts by mass of a hydrogenated nitrile rubber (A), a JIS-A hardness was 74 to 77 which is suitable for a seal member, an ML value was 4 (N·m) or less which indicates good moldability, and a wear depth was 0.1 mm or less which indicates excellent wear resistance.

In contrast, when carbon black (C) with a small DBP oil absorption is used as shown in Comparative Examples 1 and 2, a seal member with proper hardness cannot be produced without adding 30 parts by mass or more of carbon black. Furthermore, it can be understood that in such a case, moldability is reduced and wear resistance is insufficient. In addition, in both case that carbon black with an excessively large DBP oil absorption as shown in Comparative Example 3 and that the amount of carbon black (B) is excessive as shown in Comparative Example 4, moldability is reduced.

### Example 4

In this example, the raw materials were mixed in a blending proportion as in Example 1. A non-vulcanized rubber composition was prepared by kneading 100 parts by mass of a hydrogenated nitrile rubber (H-NBR), 10 parts by mass of highly conductive carbon black (DBP oil absorption: 420 mL/100 g), 10 parts by mass of MAF carbon black (DBP oil absorption: 133 mL/100 g), 4 parts by mass of dicumyl peroxide (cross-linking agent) and 1 part by mass of N,N'-m-phenylenedimaleimide (cross-linking aid) using a kneader and an open roll. The non-vulcanized rubber composition thus obtained was placed on a mold mounted on a press molding machine, and molded under the conditions of an injection pressure of 100 kgf/cm², a mold temperature of 170 °C, a vulcanization time of 5 min to give an X-ring. The X-ring is, as shown in FIG. 1, an annular molded article having an alphabetical "X" shape in cross section, with an outer diameter of 50 mm, an inner diameter of 39 mm, a width of 5.5 mm, a thickness of 4.0 mm and a sectional area of about 20 mm². The molding was conducted five times and all of the five molded articles obtained had a shape corresponding to the shape of the mold.

### Comparative Example 5

In this comparative example, the raw materials were mixed in a blending proportion as in Comparative Example 1. An X-ring was produced and evaluated as described in Example 4, except that conductive carbon black (DBP oil absorption: 420 mL/100 g) was absent and the amount of MAF carbon black (DBP oil absorption: 133 mL/100 g) was 35 parts by mass. As a result, 4 of 5 molded articles thus obtained had a part where the rubber composition was insufficiently charged in the mold, leading to a shape not corresponding to the shape of the mold.

## Claims

1. A seal member which is used in a seal part associated with sliding, comprising a molded rubber article produced by vulcanizing a rubber composition comprising,
a hydrogenated nitrile rubber (A),
carbon black (B), and
carbon black (C) and/or carbon fiber (D),
wherein
carbon black (B) has a DBP oil absorption of 250 to 450 mL/100 g,
carbon black (C) has a DBP oil absorption of 200 mL/100 g or less, and
carbon fiber (D) has an average fiber length of 0.05 to 2 mm and an average fiber diameter of 5 to 30 µm,
and wherein, based on 100 parts by mass of the hydrogenated nitrile rubber (A),
the amount of carbon black (B) is 5 to 15 parts by mass,
the total amount of carbon black (C) and/or carbon fiber (D) is 3 to 35 parts by mass, and
the total content of the fillers is 40 parts by mass or less.

2. The seal member as claimed in Claim 1, wherein an acrylonitrile content of the hydrogenated nitrile rubber (A) is 20 to 50 % by mass and a hydrogenation rate is 70 mol% or more.

3. The seal member as claimed in Claim 1 or 2, wherein said rubber composition has an ML value of 5 N·m or less, which is a minimum torque in an oscillating type cure test at 180 °C.

4. The seal member as claimed in any of Claims 1 to 3, having a JIS-A hardness of 70 to 80.

5. The seal member as claimed in any of Claims 1 to 4, which is a bearing seal, an oil seal, an O-ring or an X-ring.

6. A seal structure comprising the seal member as claimed in any of Claims 1 to 5, as a sliding part.
